(19) Europäisches Patentamt
European Patent Office
Office européen des brevets

(11) Veröffentlichungsnummer: **0 419 969 A1**

(12) **EUROPÄISCHE PATENTANMELDUNG**

(21) Anmeldenummer: 90117747.7

(22) Anmeldetag: **14.09.90**

(51) Int. Cl.5: **B65D 1/28**

(30) Priorität: **23.09.89 DE 3931853**

(43) Veröffentlichungstag der Anmeldung:
**03.04.91 Patentblatt 91/14**

(84) Benannte Vertragsstaaten:
**AT DE ES FR GB IT SE**

(71) Anmelder: **BERGER + PARTNER GmbH**
**Talstrasse 172**
**W-7024 Filderstadt 1(DE)**

(72) Erfinder: **Bürger, Friedhelm**
**Herberger Weg 2 A**
**W-5628 Heiligenhaus(DE)**

(74) Vertreter: **Witte, Alexander, Dr.-Ing. et al**
**Witte, Weller & Hilgenfeldt Patent- und**
**Rechtsanwälte Augustenstrasse 7**
**W-7000 Stuttgart 1(DE)**

(54) Verschlussstopfen.

(57) Ein Verschlußstopfen dient zum vorübergehenden Abdichten von Anschlußöffnungen (3) an nichteingebauten, flüssigkeitsbetätigten Aggregaten, insbesondere ölhydraulischen Systemen (1) für Kraftfahrzeuge. In die Anschlußöffnung (3) ist ein Abschnitt (12) des Verschlußstopfens (10) eingesetzt und füllt diesen dicht aus. Der Abschnitt (12) weist einen mit dem verschlossenen Bereich der Anschlußöffnung (3) kommunizierenden Hohlraum auf. Der Hohlraum ist mit einem für die Flüssigkeit saugfähigen Material ausgefüllt, beispielsweise mit einem Tampon (17).

FIG.1A

## VERSCHLUSSSTOPFEN

Die Erfindung betrifft einen Verschlußstopfen zum vorübergehenden Abdichten von Anschlußöffnungen an nicht-eingebauten, flüssigkeitsbetätigten Aggregaten, insbesondere ölhydraulischen Systemen für Kraftfahrzeuge, mit einem in die Anschlußöffnung eingesetzten und diese ausfüllenden Abschnitt.

Verschlußstopfen der vorstehend genannten Art sind bekannt.

Flüssigkeitsbetätigte Aggregate, beispielsweise ölhydraulische Systeme für Kraftfahrzeuge, wie Bremsanlagen, Servo-Lenkungen, Federungen u. dgl., werden in der Regel bei einem bestimmten Zulieferer eines Kraftfahrzeugherstellers produziert. Bevor die genannten Aggregate zum Kraftfahrzeughersteller ausgeliefert werden, werden sie beim Zulieferer auf ihre Funktionsfähigkeit hin überprüft. Wenn das Aggregat beispielsweise ein Bremssystem ist, bei dem Sicherheitsanforderungen eine herausragende Rolle spielen, so werden diese Systeme beim Hersteller einem aufwendigen Abnahmetest unterzogen, ehe sie an den Kraftfahrzeughersteller ausgeliefert werden. Hierzu wird das System an Öldruckleitungen angeschlossen, und es werden einige Betriebszustande des Systems auf einem Prüfstand simuliert.

Nach dem Abschluß dieser Testprozedur ist das System mit Hydrauliköl gefüllt, das nun aus dem System abgelassen wird. Da das System jedoch eine Vielzahl von Ölleitungen enthält, die in einfacher Weise nicht zu entleeren sind, werden die eingangs genannten Verschlußstopfen, üblicherweise Kunststoff-Verschlußschrauben, in die nun freiliegenden Anschlußöffnungen eingeschraubt, damit während des Transportes der Systeme keine Ölreste auslaufen können.

Beim Kraftfahrzeughersteller werden die Verschlußschrauben wieder ausgeschraubt, und das System wird in das Kraftfahrzeug eingebaut und dort an die entsprechenden Leitungen, beispielsweise die Bremsleitungen, angeschlossen.

Da jedoch, wie erwähnt, Ölreste im Inneren des Systems verblieben sind und sich dies wegen der zahlreichen Ölkanäle und Kapillaren nie vermeiden läßt, kann es geschehen, daß beim Anschließen des Systems durch Anschrauben der Bremsleitungen an die Anschlußöffnungen diese Ölreste austreten und an den Bremsleitungen entlanglaufen.

In der nun nachfolgenden Kontrolle des Kraftfahrzeugherstellers, bei der beispielsweise die Dichtheit der Bremsleitungen überprüft wird, ist es nun nicht möglich, auf einfache Weise visuell festzustellen, ob eine bestimmte Bremsleitung korrekt, d.h. dicht, angeschlossen wurde, wenn sich an der Bremsleitung Ölspuren befinden, weil diese Ölspuren entweder aus einem nicht-korrekten Anschluß ausgetreten sein können oder es sich um die bereits erwähnten Ölreste handeln kann, die an der Bremsleitung entlanggelaufen sind, obwohl diese korrekt angeschlossen wurde.

Der Erfindung liegt daher die Aufgabe zugrunde, einen Verschlußstopfen der eingangs genannten Art dahingehend weiterzubilden, daß ein Auslaufen von Ölresten aus den Aggregaten vermieden wird, wenn die Verschlußstopfen zur Montage des Aggregates wieder entfernt werden.

Diese Aufgabe wird erfindungsgemäß dadurch gelost, daß der Abschnitt einen mit dem verschlossenen Teil der Anschlußöffnung kommunizierenden Bereich aufweist, und daß der Bereich mit einem für die Flüssigkeit saugfähigen Material ausgefüllt ist.

Die der Erfindung zugrundeliegende Aufgabe wird auf diese Weise vollkommen gelost. Wenn nämlich Flüssigkeitsreste im Aggregat verbleiben und diese z.B. während eines Transportes so bewegt werden, daß sie zur Anschlußöffnung hin laufen, so sammeln sich diese Flüssigkeitsreste nicht, wie beim Stand der Technik, vor der Verschlußschraube, um dann nach deren Ausschrauben auszulaufen, sie treten vielmehr in den Bereich des Verschlußstopfens ein und werden dort vom saugfähigen Material aufgesogen und festgehalten mit der Folge, daß beim Ausschrauben des erfindungsgemäßen Verschlußstopfens keine Ölreste mehr aus laufen können.

Bei einem ersten Ausführungsbeispiel der Erfindung besteht der Verschlußstopfen insgesamt aus einem saugfähigen Material.

Diese Maßnahme hat den Vorteil, daß das Aufnahmevolumen für die Ölreste besonders groß ist.

Bei einer anderen Gruppe von Ausführungsbeispielen ist hingegen der Bereich als Hohlraum ausgebildet.

Diese Maßnahme hat den Vorteil, daß ein mechanisch stabiler Verschlußstopfen zur Verfugung gestellt werden kann, bei dem der Hohlraum von einem harten Werkstoff umgeben ist, dessen Angriffsflächen von einem Werkzeug, beispielsweise einem automatisierten Werkzeug, ergriffen werden können.

Bei einer bevorzugten Ausgestaltung der Erfindung ist der Hohlraum als Längsbohrung ausgebildet und von einem zylindrischen Tampon ausgefüllt.

Diese Maßnahme hat den Vorteil, daß eine besonders einfache Herstellung des Hohlraumes möglich ist und daß auch das Befüllen des Hohlraumes mit dem saugfähigen Material in einfacher Weise möglich ist, zumal handelsübliche zylindrische Tampons verwendet werden können.

Bei einer weiteren bevorzugten Ausgestaltung der Erfindung kommuniziert der Hohlraum über eine stirnseitige Öffnung des Abschnittes mit der Anschlußöffnung.

Diese Maßnahme hat den Vorteil, daß unmittelbar dort, wo Ölreste an die Stirnseite des Verschlußstopfens heranlaufen, auch eine Öffnung zum Übertritt der Flüssigkeit in den Hohlraum vorhanden ist.

Alternativ oder zusätzlich kann erfindungsgemäß vorgesehen sein, daß der Hohlraum über mindestens einen axialen Schlitz des Abschnittes mit der Anschlußöffnung kommuniziert.

Diese Maßnahme hat den Vorteil, daß auch von der Peripherie des Verschlußstopfens ein Übertritt in den Hohlraum möglich ist.

Bei einer bevorzugten Weiterbildung dieser Variante ist der Verschlußstopfen als Verschlußschraube ausgebildet, und zwar derart, daß der axiale Schlitz nur in einem Bereich des Abschnittes ausgebildet ist, der über ein Gewinde der Anschlußöffnung in einen sich erweiternden Hohlraum frei hineinragt.

Diese Maßnahme hat den Vorteil, daß die Über den axialen Schlitz durchtretende Flüssigkeit nicht bis in den Bereich des Gewindes hineingelangen kann, von wo ein Austritt beim Ausschrauben des Verschlußstopfens und beim nachfolgenden Einschrauben von Anschlußgliedern der Bremsleitung möglich wäre.

Besonders bevorzugt ist, wenn der Verschlußstopfen nach Art einer Maschinenschraube ausgebildet ist.

Diese Maßnahme hat den Vorteil, daß in einer Produktionslinie eine große Zahl von erfindungsgemäßen Verschlußstopfen in kurzer Zeit mit üblichen Montageeinrichtungen angebracht werden kann.

Bei einer Variante kann dabei ein Kopf der Schraube mit einer Ringnut und diese mit einer Mehrkantfläche versehen sein.

Diese Maßnahme hat den Vorteil, daß der Verschlußstopfen mit einem Innenmehrkant-Kopf in einfacher Weise ergriffen werden kann. Außerdem ergibt sich der Vorteil, daß der Hohlraum bis in den Kopf der Schraube hinein ausgebildet werden kann, so daß ein besonders großes Reservoir für das saugfähige Material zur Verfügung steht.

Bei einer anderen Variante ist der Kopf der Schraube mit einer Ausnehmung und diese mit einer Innenmehrkantfläche versehen.

Diese Maßnahme hat den Vorteil, daß eine besonders große Mehrkantfläche zur Verfügung steht, die mit massiven Außenmehrkant-Werkzeugen ergriffen werden kann.

Bei einer noch anderen Variante ist der Kopf der Schraube mit einer Ausnehmung versehen, und das saugfähige Material füllt die Ausnehmung mindestens teilweise aus.

Diese Maßnahme hat den Vorteil, daß ein besonders großes Volumen des Hohlraumes zur Verfogung steht, so daß die Aufnahmekapazität für die Flüssigkeit noch weiter gesteigert wird.

Bei weiteren Ausführungsbeispielen der Erfindung ist der Hohlraum nach außen verschließbar.

Diese Maßnahme hat den Vorteil, daß die in dem saugfähigen Material gespeicherte Flüssigkeit beim Ausschrauben der Verschlußstopfen nicht versehentlich dadurch wieder freigesetzt wird, daß das saugfähige Material beispielsweise zusammengedrückt wird. Dies ist nicht möglich, weil der Hohlraum bei diesem Ausführungsbeispiel der Erfindung nach außen verschlossen ist.

Bei der bevorzugten Weiterbildung dieser Variante ist der Verschluß als abnehmbare Kappe ausgebildet.

Diese Maßnahme hat den Vorteil, daß sowohl das Einsetzen des saugfähigen Materiales in den Verschlußstopfen vereinfacht wird, wie es auch möglich ist, im Einzelfall einen erfindungsgemäßen Verschlußstopfen einer erneuten Verwendung zuzuführen, indem nach dem Abnehmen der Kappe das vollgesogene saugfähige Material entfernt, der Verschlußstopfen gereinigt und anschließend wieder mit saugfähigem Material befüllt wird.

Bei weiteren besonders bevorzugten Ausführungsbeispielen der Erfindung ist der als Schaft der Schraube ausgebildete Abschnitt an mindestens einer Position seines Umfanges mit einer radialen Verdickung versehen.

Diese Maßnahme hat den Vorteil, daß beim Eindrehen des Verschlußstopfens diejenigen Flüssigkeitsreste, die im Gewinde der Anschlußöffnung verblieben sind, aus den Gewindegängen abgestreift werden, weil die radiale Verdickung die Gewindegänge vollkommen ausfüllt.

Vorteilhaft ist dabei, wenn die radiale Verdickung sich axial neben und parallel zu dem axialen Schlitz erstreckt.

Diese Maßnahme hat den Vorteil, daß die aus den Gewindegängen mittels der sich auch axial erstreckenden radialen Verdickung abgestreiften Flüssigkeitsreste unmittelbar über den axialen Schlitz in den Bereich des saugfähigen Materiales gelangen können.

Weiterhin ist dabei von Vorteil, wenn zwei radiale Verdickungen auf in Umfangsrichtung des Abschnittes unterschiedlichen Seiten eines axialen Schlitzes angeordnet sind.

Diese Maßnahme hat den Vorteil, daß der bereits beschriebene Abstreifeffekt sowohl beim Einschrauben wie auch beim erneuten Ausschrauben des Verschlußstopfens wirksam wird.

Bevorzugt ist, wenn der erfindungsgemäße Verschlußstopfen aus einem thermoplastischen Kunststoff besteht. Weiterhin ist bevorzugt, wenn das saugfähige Material ein Papier ist.

Schließlich läßt sich die Erfindung mit besonderem Vorteil zum Abdichten von Anschlußöffnungen von hydraulischen Bremsanlagen auf dem Transport zwischen einem herstellerseitigen Prüfstand und einer Montageanlage eines Anwenders einsetzen.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1A eine Seitenansicht, im Schnitt, durch ein Ausführungsbeispiel eines erfindungsgemäßen Verschlußstopfens, mit zwei Varianten,

Fig. 1B eine Ansicht in Richtung der Linie I-I von Fig. 1A;

Fig. 2A und 2B Ansichten, ähnlich wie die der Fig. 1A und 1B, jedoch für ein anderes Ausführungsbeispiel der Erfindung;

Fig. 3 eine weitere Ansicht, ähnlich Fig. 1A, für noch ein weiteres Ausfohrungsbeispiel der Erfindung;

Fig. 4 eine Seitenansicht eines weiteren Ausführungsbeispiels eines insgesamt aus saugfähigem Material bestehenden erfindungsgemäßen Verschlußstopfens.

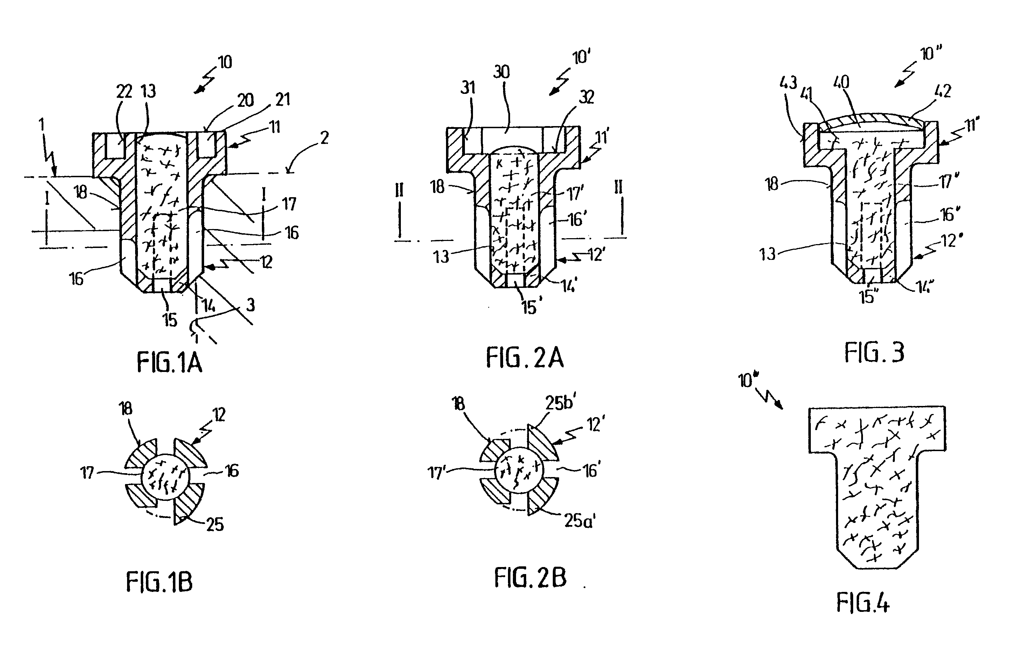

In Fig. 1 bezeichnet 1 äußerst schematisch ein Bremssystem als Beispiel für ein flüssigkeitsbetätigtes Aggregat, wie es im Rahmen der vorliegenden Erfindung von Interesse ist. Von einer äußeren Oberfläche 2 des Bremssystems 1 fohrt eine Anschlußöffnung 3, wie sie in der rechten Hälfte von Fig. 1A zu erkennen ist, über Kanäle großeren und kleineren Querschnitts zu flüssigkeitsbetätigten oder Flüssigkeit betätigenden Komponenten im Inneren des Bremssystems 1.

Während des Betriebes oder aber auch während eines Probelaufes des Bremssystems 1 ist an die Anschlußöffnung 3 eine Öldruckleitung, beispielsweise eine Bremsleitung, angeschlossen.

Um die Anschlußöffnung 3 während des Transportes des Bremssystems 1 vom Hersteller zu einem Kraftfahrzeughersteller zu verschließen, ist ein Verschlußstopfen 10 in die Anschlußöffnung 3 eingeschraubt. Der Verschlußstopfen 10 ist nach Art einer Maschinenschraube ausgebildet und soll verhindern, daß Ölreste, die sich im Inneren des Bremssystems 1 noch befinden, aus der Anschlußöffnung 3 heraus laufen.

Der Verschlußstopfen 10 weist einen äußeren, ersten Abschnitt 11, nämlich den Schraubenkopf, und einen inneren, eingeschraubten, zweiten Abschnitt 12, nämlich den Schraubenschaft, auf.

Die Abschnitte 11 und 12 sind von einer Sackbohrung 13 durchsetzt, die den wesentlichen Querschnitt des zweiten Abschnittes 12 einnimmt und nur durch einen dunnen Boden 14 nach unten hin abgeschlossen ist. Eine axiale Öffnung 15 durchsetzt den Boden 14, um einen Zugang vom Inneren der Anschlußöffnung 3 in den durch die Bohrung 13 gebildeten Hohlraum zu ermöglichen.

Dem selben Zweck dienen axiale Schlitze 16, die seitlich im zweiten Abschnitt 12 angebracht sind und vom Außenraum zur Bohrung 13 führen.

Die Bohrung 13 ist mit einem Tampon 17 ausgefüllt, der eine im wesentlichen zylindrische Gestalt besitzt.

Der zweite Abschnitt 12 ist schließlich mit einem Außengewinde 18 versehen, um ein Einschrauben in die Wandung des Antiblockiersystems 1 zu ermöglichen.

Bei der in der linken Hälfte der Fig. 1 dargestellten Variante hat das Bremssystem 1 nur eine verhältnismäßig dünne Wandung, so daß der zweite Abschnitt 12 nach innen über die Wandung in einen Hohlraum frei hineinragt, der großer ist als die Anschlußöffnung 3.

In diesem Falle ist es zweckmäßig, den hier mit 161 bezeichneten axialen Schlitz nur so lang in axialer Richtung auszubilden, daß er unterhalb der Einschraublänge des Verschlußstopfens 10 endet.

Auf diese Weise ist zwar ein Übertritt der Flüssigkeit in die Bohrung 13 möglich, nicht jedoch in den Bereich des Gewindes 18.

Wird der Verschlußstopfen 10 zum Abdichten der Anschlußbohrung 3 während eines Transportes des Bremssystems 1 vom Hersteller zu einem Kraftfahrzeughersteller verwendet, so können die im Bremssystem 1 verbliebenen Ölreste bis zur Anschlußbohrung 3 hin laufen und treten dort, insbesondere bei Erschütterungen oder Lageveränderungen, wie sie bei einem Transport typischerweise auftreten, über die Öffnung 15 und/oder die Schlitze 16 in die Bohrung 13 über. Da diese mit einem Tampon 17, d.h. einem Gebilde aus saugfähigem Material, ausgefüllt ist, werden die Flüssigkeitsreste aufgesaugt und in der Bohrung 13 gespeichert.

Wenn dann der Verschlußstopfen 10 beim Kraftfahrzeughersteller wieder ausgeschraubt wird, um nun die Bremsleitungen oder sonstige Öldruckleitungen des Kraftfahrzeuges anzuschließen, so muß nicht mehr befürchtet werden, daß Ölreste aus dem Bremssystem 1 auslaufen.

Der Verschlußstopfen 10 der Fig. 1A ist im Kopf der Maschinenschraube, d.h. im ersten Abschnitt 11, von einer Oberseite 20 ausgehend mit einer Ringnut 21 versehen. Die Ringnut 21 weist auf ihrer Innenwand einen Außensechskant auf. Auf diese Weise ist es möglich, den Verschlußstopfen 10 in Fig. 1A von oben mit einem üblichen Innensechskant-Schlüssel zu ergreifen und anzuziehen oder zu lösen. Die Bohrung 13 geht dabei bis zur Oberseite 20 durch, so daß sie ein besonders großes Volumen zur Speicherung von Ölresten darstellt.

Fig. 1B zeigt im Schnitt, daß von den zwischen den Schlitzen 16 stehengebliebenen Segmenten des zweiten Abschnittes 12 eines mit einem radialen Vorsprung 25 versehen ist. Der radiale Vorsprung 25 legt sich beim Einschrauben des Verschlußstopfens 10 in die Anschlußöffnung 3 dicht an die Innenseite der Gewindegänge an. Dort verbliebene Ölreste werden daher abgestreift und nach innen gefordert. Da, wie aus Fig. 1B deutlich zu erkennen ist, der radiale Vorsprung 25 neben einem axialen Schlitz 16 angeordnet ist und auch axial so weit durchläuft wie der axiale Schlitz 16, wird beim Drehen des Verschlußstopfens 10 in Uhrzeigerrichtung (Darstellung der Fig. 1B) das Öl in den unmittelbar benachbarten Schlitz abgestreift und gelangt von dort sofort auf den Tampon 17, wo das Öl aufgesaugt wird.

Bei den weiteren Ausführungsbeispielen der Fig. 2A, 2B und 3 werden dieselben Bezugszeichen verwendet wie in Fig. 1A und 1B, lediglich in Fig. 2A und 2B ist ein einfaches Apostrophzeichen und in Fig. 3 ein doppeltes Apostrophzeichen hinzugesetzt.

Das Ausführungsbeispiel der Fig. 2A und 28 unterscheidet sich zunächst dadurch von demjenigen der Fig. 1A und 18, daß der erste Abschnitt 11′ mit einer Ausnehmung 30 versehen ist, die nahezu den gesamten ersten Abschnitt 11′ ausfüllt. Die Ausnehmung 30 ist mit einem Innensechskant 31 versehen.

Der Verschlußstopfen 10′ kann daher mit einem verhältnismäßig dicken Werkzeug, nämlich einem Außensechskant-Werkzeug, ergriffen und gehandhabt werden.

Aufgrunddessen erstreckt sich die Bohrung 13 lediglich bis zu einem Boden 32 der Ausnehmung 30, und auch der Tampon 17′ ist, verglichen mit dem Ausführungsbeispiel der Fig. 1A und 1B, axial etwas kürzer.

Fig. 2B zeigt eine weitere Variante dahingehend, daß zwei der vier zwischen den Schlitzen 16′ stehengebliebenen Segmente des zweiten Abschnittes 12′ mit radialen Vorsprüngen 25a′ und 25b′ versehen sind. Diese radialen Vorsprünge 25a′ und 25b′ sind dabei, in Umfangsrichtung des zweiten Abschnittes 12′ gesehen, auf unterschiedlichen Seiten von Schlitzen 16′ angeordnet. Dies bewirkt, daß beim Eindrehen und auch beim Ausdrehen des Verschlußstopfens 10 jeweils Öl aus den Gewindegängen abgestreift wird, und zwar unmittelbar in den jeweils benachbarten Schlitz 16′.

Bei der in Fig. 3 dargestellten Variante ist der erste Abschnitt 11″ wiederum mit einer Ausnehmung 40 versehen, ähnlich wie dies in Fig. 2A bereits dargestellt und erläutert wurde.

In Abweichung davon ist beim Ausführungsbeispiel der Fig. 3 jedoch der Tampon 17″ mit einem radial verdickten Kopfteil 41 versehen, das die Ausnehmung 40 noch teilweise ausfüllt. Oberhalb des Kopfteiles 41 ist die Ausnehmung 40 mit einer Verschlußkappe 42 verschlossen.

Um den Verschlußstopfen 10″ der Fig. 3 handhaben zu können, ist zweckmäßigerweise der erste Abschnitt 11″ an seinem Außenumfang mit einem Außensechskant 43 versehen.

Der Verschlußstopfen 10″ der Fig. 3 weist somit einen Tampon 17″ mit noch größerem Volumen auf, und der Tampon 17″ ist auch nach außen hin gekapselt, weil die Verschlußkappe 42 einen Übertritt der Flüssigkeit nach außen hin verhindert, beispielsweise dann, wenn ein Benutzer des Verschlußstopfens 10″ von der oberen radialen Stirnseite her mit dem Finger auf den Tampon 17″ drückt.

Die Verschlußkappe 42 kann abnehmbar ausgebildet sein, so daß auch der Tampon 17″ aus dem Verschlußstopfen 10″ wieder herausgenommen werden kann.

Die Verschlußstopfen bestehen bevorzugt aus einem thermoplastischen Kunststoff, insbesondere Polyamid. Das saugfähige Material wird, wie bereits erwähnt, vorzugsweise durch einen Tampon 17 gebildet, es ist jedoch auch möglich, den hierfür vorgesehenen Hohlraum mit einem hygroskopischen Granulat zu befüllen.

Fig. 4 zeigt schließlich noch ein weiteres Ausführungsbeispiel eines erfindungsgemäßen Verschlußstopfens 10″, der insgesamt aus einem saugfähigen Material, beispielsweise gepreßtem Papier, besteht. Der Verschlußstopfen 10″ ist wie eine Maschinenschraube ausgebildet und kann mit der Hand oder auch mit Werkzeugen eingeschraubt werden.

Weiterhin versteht sich, daß die erfindungsgemäßen Verschlußstopfen hinsichtlich ihrer jeweiligen Werkzeugangriffsflächen in beliebiger Weise ausgebildet werden können, d.h. nicht nur als Innen- oder Außensechskant, sondern auch mit geriffelter oder sonstwie formschlüssig handhabbarer Oberfläche. Auf diese Weise ist es möglich, die erfindungsgemäßen Verschlußstopfen in Bestückungsautomaten zu verarbeiten, um ein automatisiertes Anbringen der Verschlußstopfen zu ermöglichen.

**Ansprüche**

1. Verschlußstopfen zum vorübergehenden Abdichten von Anschlußöffnungen (3) an nicht-eingebauten, flüssigkeitsbetätigten Aggregaten, insbesondere ölhydraulischen Systemen (1) für Kraftfahrzeuge, mit einem in die Anschlußöffnung (3) eingesetzten und diese ausfüllenden Abschnitt (12), dadurch gekennzeichnet, daß der Abschnitt (12) einen mit dem verschlossenen Teil der Anschlußöffnung (3) kommunizierenden Bereich aufweist, und daß der Bereich mit einem für die Flüssigkeit saugfähigen Material ausgefüllt ist.

2. Verschlußstopfen nach Anspruch 1, dadurch gekennzeichnet, daß er (10''') insgesamt aus einem saugfähigen Material besteht.

3. Verschlußstopfen nach Anspruch 1, dadurch gekennzeichnet, daß der Bereich als Hohlraum ausgebildet ist.

4. Verschlußstopfen nach Anspruch 3, dadurch gekennzeichnet, daß der Hohlraum als Längsbohrung (13) ausgebildet und von einem zylindrischen Tampon (17) ausgefüllt ist.

5. Verschlußstopfen nach Anspruch 3 oder 4, dadurch gekennzeichnet, daß der Hohlraum über eine stirnseitige Öffnung (15) des Abschnittes (12) mit der Anschlußöffnung (3) kommuniziert.

6. Verschlußstopfen nach einem oder mehreren der Ansprüche 3 bis 5, dadurch gekennzeichnet, daß der Hohlraum über mindestens einen axialen Schlitz (16) des Abschnittes (12) mit der Anschlußöffnung (3) kommuniziert.

7. Verschlußstopfen nach Anspruch 6, dadurch gekennzeichnet, daß er als Verschlußschraube ausgebildet ist, und daß der axiale Schlitz (16) nur in einem Bereich des Abschnittes (12) ausgebildet ist, der über ein Gewinde der Anschlußöffnung (3) in einen sich erweiternden Hohlraum frei hineinragt.

8. Verschlußstopfen nach einem oder mehreren der Ansprüche 1 bis 7, dadurch gekennzeichnet, daß er nach Art einer Maschinenschraube ausgebildet ist.

9. Verschlußstopfen nach Anspruch 8, dadurch gekennzeichnet, daß ein Kopf der Schraube mit einer Ringnut (21), und diese mit einer Mehrkantfläche (22) versehen ist.

10. Verschlußstopfen nach Anspruch 8, dadurch gekennzeichnet, daß ein Kopf (11') der Schraube mit einer Ausnehmung (30) und diese mit einer Innenmehrkantfläche (31) versehen ist.

11. Verschlußstopfen nach Anspruch 8, dadurch gekennzeichnet, daß ein Kopf (11'') der Schraube mit einer Ausnehmung (40) versehen ist, und daß das saugfähige Material die Ausnehmung (40) mindestens teilweise ausfüllt.

12. Verschlußstopfen nach einem oder mehreren der Ansprüche 3 bis 11, dadurch gekennzeichnet, daß der Hohlraum nach außen verschließbar ist.

13. Verschlußstopfen nach Anspruch 12, dadurch gekennzeichnet, daß der Verschluß als abnehmbare Kappe (42) ausgebildet ist.

14. Verschlußstopfen nach einem oder mehreren der Ansprüche 8 bis 13, dadurch gekennzeichnet, daß der als Schaft der Schraube ausgebildete Abschnitt (12) an mindestens einer Position seines Umfanges mit einer radialen Verdickung (25) versehen ist.

15. Verschlußstopfen nach Anspruch 6 und 14, dadurch gekennzeichnet, daß die radiale Verdickung (25) sich axial neben und parallel zu dem axialen Schlitz (16) erstreckt.

16. Verschlußstopfen nach Anspruch 15, dadurch gekennzeichnet, daß zwei radiale Verdickungen (25a', 25b') auf in Umfangsrichtung des Abschnittes (12') unterschiedlichen Seiten eines axialen Schlitzes (16') angeordnet sind.

17. Verschlußstopfen nach einem oder mehreren der Ansprüche 3 bis 16, dadurch gekennzeichnet, daß er aus einem thermoplastischen Kunststoff besteht.

18. Verschlußstopfen nach einem oder mehreren der Ansprüche 1 bis 17, dadurch gekennzeichnet, daß das saugfähige Material Papier ist.

19. Verwendung eines Verschlußstopfens nach einem oder mehreren der Ansprüche 1 bis 18 zum Abdichten von Anschlußöffnungen von hydraulischen Bremsanlagen auf dem Transport zwischen einem herstellerseitigen Prüfstand und einer Montageanlage eines Kraftfahrzeugherstellers.

FIG.1A

FIG.1B

FIG.2A

FIG.2B

FIG.3

FIG.4

EP 0 419 969 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3212307 (ZAHNRADFABRIK FRIEDRICHSHAFEN) * Seite 3, Absätze 1 - 2; Figur 1 * --- | 1 | B65D51/28 |
| A | FR-A-2623477 (PARTICIPATIONS ET PROCEDES INDUSTRIELS S.A.H.) * Anspruch 1; Figur 1 * ----- | 1-3, 12 | |
| | | | **RECHERCHIERTE SACHGEBIETE (Int. Cl.5)** B65D B60T B62D |

Der vorliegende Recherchenbericht wurde für alle Patentansprüche erstellt

| Recherchenort | Abschlußdatum der Recherche | Prüfer |
|---|---|---|
| BERLIN | 12 DEZEMBER 1990 | SPETTEL, J.D.M.L. |